# EUROPEAN PATENT SPECIFICATION

(11) **EP 3 876 566 B1**
(45) Date of publication and mention of the grant of the patent: **05.04.2023**
(21) Application number: 19880704.2
(22) Date of filing: 25.10.2019
(51) Int. Cl.: H04W 4/70, H04W 4/46

(54) **DIRECT COMMUNICATION RESOURCE ALLOCATION METHOD AND APPARATUS**
VERFAHREN UND VORRICHTUNG ZUR DIREKTEN KOMMUNIKATIONSRESSOURCENZUWEISUNG
PROCÉDÉ ET APPAREIL D'ATTRIBUTION DE RESSOURCES DE COMMUNICATION DIRECTE

(30) Priority: 31.10.2018 CN 201811291107; 21.01.2019 CN 201910054760
(43) Date of publication of application: 08.09.2021
(60) Divisional application: 23153299.5
(73) Proprietor: Datang Mobile Communications Equipment Co., Ltd., Beijing 100083 (CN)
(72) Inventor: ZHAO, Yali, Beijing 100191 (CN)
(74) Representative: Cabinet Nony
(86) International application number: PCT/CN2019/113184
(87) International publication number: WO 2020/088355

(56) References cited:
- EP-A1- 2 723 144
- EP-A1- 3 131 364
- WO-A1-2020/088355
- ERICSSON: "Management of Sidelink logical channel groups", 3GPP DRAFT; R2-154154 - MANAGEMENT OF SIDELINK LOGICAL CHANNEL GROUPS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Malmö, Sweden; 20151005 - 20151009 4 October 2015 (2015-10-04), XP051004747, Retrieved from the Internet: URL:http://www.3gpp.org/ftp/Meetings_3GPP_ SYNC/RAN2/Docs/ [retrieved on 2015-10-04]

## Description

### Field

The application relates to the field of wireless communication technologies, and particularly to a sidelink communication resource allocation method and apparatus.

### Background

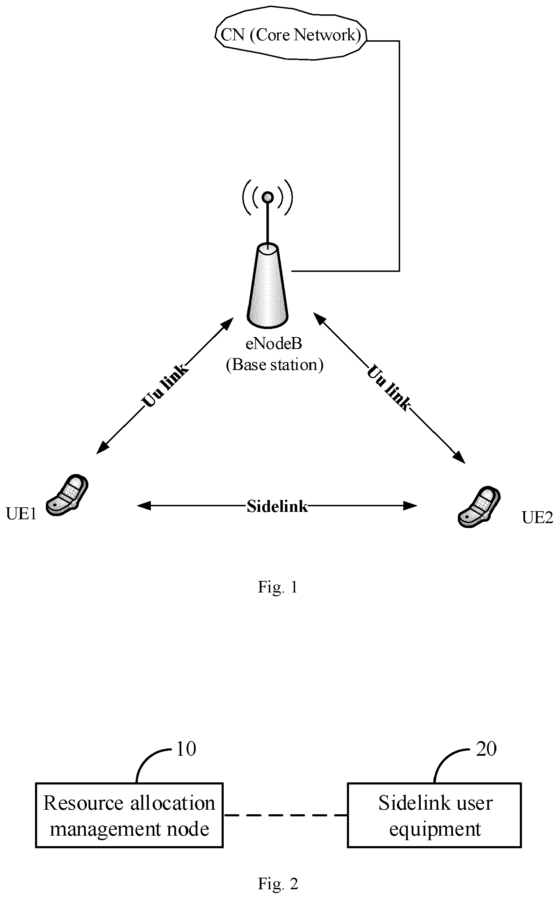

The sidelink communication is performed directly between User Equipments that are close to each other. As shown in Fig. 1, for ease of description, the communication link for sidelink between User Equipments is defined as Sidelink, and its corresponding wireless interface is called Sidelink interface; and the cellular communication link between the network and a sidelink communication user equipment is called Uu link, and its corresponding interface is called Uu interface.

The user equipment for sidelink communication may all in coverage or all out of coverage, or some user equipments may be in coverage and some user equipment may be out of coverage. The so-called in coverage means that the user equipments participating in the sidelink communication are located within the coverage of 3GPP sidelink communication carriers, and the so-called out of coverage means that the user equipments participating in the sidelink communication are not within the coverage of 3GPP sidelink communication carriers.

Typical sidelink communication scenarios include three types as follows.
1) Unicast communication.
   That is, the one-to-one communication is performed among user equipments.
2) Multicast communication.
   A user equipment can transmit the same data to all user equipments in a communication group at a time; when there is only one receiving user equipment in the communication group, the corresponding mode is unicast communication. The unicast communication can be regarded as a special case of multicast communication.
3) Broadcast communication.
   A user equipment can transmit the same data to all nearby user equipments at a time, and the broadcast communication does not guarantee the reliability of communication.

Currently, the sidelink communication interface supports two resource allocation modes.
1) Resource allocation mode of network scheduling.
   That is, it is a mode in which the network side allocates resources to a user equipment according to the Sidelink BSR (Buffer Status Reporting) reported by the user equipment.
2) Resource allocation mode of user equipment self-selection.

That is, a user equipment itself selects a resource from the pre-configured or network-broadcast transmission resources to perform the data transmission of the sidelink.

For the sidelink interface, if the user equipment is in coverage, the resources used by the sidelink communication interface thereof are controlled by the network device whether the resource allocation mode of network scheduling or the resource allocation mode of user equipment self-selection is used, and the network device controls the resource pool allocated for the communication interface (corresponding to the resource allocation mode of user equipment self-selection) or specific resources (corresponding to the resource allocation mode of network scheduling) through the Uu interface. Therefore, they are collectively referred to as the resource allocation based on Uu interface.

In the 5G system, for the user equipments that support the sidelink communication, the capabilities on the sidelink communication interface are also different. Some user equipments only support the LTE (Long Term Evolution) wireless access technology on the sidelink interface, some user equipments only support the NR (New Radio) wireless access technology on the sidelink interface, and some user equipments can support both the LTE wireless access technology and the NR wireless access technology on the sidelink interface. For a user equipment that supports only one wireless access technology on the sidelink interface, there is no doubt that it can only use this wireless access technology on the sidelink interface; but for a user equipment that supports two or more wireless access technologies at the same time, the user equipment can select the wireless access technology based on the logical channel when it has a sidelink communication requirement, that is, the wireless access technologies used by different logical channels on the sidelink interface may be different. In this case, it is necessary to consider how to ensure that the resources allocated by the sidelink communication resource allocation node can match with the wireless access technology selected by each logical channel on the sidelink interface of a user equipment.
EP 2 723 144 A1 discloses the following: a buffer status reporting scheme for a terminal (10) wishing to transmit data simultaneously in multiple RATs of a wireless communication network, which enables the co-ordination of multiple base stations (12, 14) of different RATs (e.g. LTE eNB, UMTS base station, WiFi access point, etc.) with the assistance of the terminal (10) in order to achieve efficient radio resource scheduling for multi-RAT multi-flow aggregation in uplink. A radio bearer is configured for multi-RAT multi-flow aggregation by the network, and multiple logical channel IDs are assigned to this RB that may be associated with different RATs. Logical channels associated with a certain RAT (or a given set of RATs) may be grouped into one logical channel group for radio resource scheduling reason. The terminal (10) performs buffer status reporting, according to the configuration, on all involved RATs and sends reports/indications to one or more involved base stations (12, 14).
The article of "Management of Sidelink logical channel groups", 3GPP DRAFT; R2-154154, discloses the following: each sidelink logical channel is mapped to one of four LCGs depending on the PPP of the sidelink logical channel.

### Summary

The application provides a method for allocating sidelink resource, which can ensure that the resources allocated by the sidelink resource allocation node can match with the wireless access technology selected by each logical channel on the sidelink interface of a user equipment, and thus ensure that the sidelink data can be transmitted by using the reasonable wireless access technology.

In a first aspect, the application provides a method for allocating sidelink resource, including:
reporting auxiliary information to a resource allocation management node;
receiving configuration information of logical channel groups of a sidelink interface transmitted by the resource allocation management node, wherein the configuration information of logical channel groups of the sidelink interface is used to indicate that logical channels using different wireless access technologies correspond respectively to different logical channel groups;
determining a logical channel group corresponding to a logical channel of the sidelink interface according to the configuration information of logical channel groups of the sidelink interface;
   reporting a Buffer Status Report, BSR, according to the determined logical channel group corresponding to the logical channel of the sidelink interface;
   receiving transmission resources of the sidelink interface allocated by a radio resource allocation management node according to the BSR;
   wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology; the configuration information of logical channel groups of the sidelink interface is determined according to the auxiliary information;
   when the configuration information of logical channel groups of the sidelink interface is the mapping relationship between QoS parameters of the sidelink interface and logical channel group identifiers, the auxiliary information includes all or a part of QoS parameters corresponding to each logical channel of a sidelink interface of a sidelink user equipment;
when the configuration information of logical channel groups of the sidelink interface is the mapping relationship between logical channels of the sidelink interface and logical channel group identifiers, the auxiliary information includes each logical channel identifier of a sidelink interface of a sidelink user equipment and corresponding QoS parameters, and a wireless access technology that each logical channel of the sidelink interface of the sidelink user equipment expects to use.

In a second aspect, the application provides a method for allocating sidelink resource, including:
receiving auxiliary information reported by a sidelink user equipment;
determining configuration information of logical channel groups of a sidelink interface according to the auxiliary information reported by the sidelink user equipment;
transmitting the configuration information of logical channel groups of the sidelink interface to the sidelink user equipment to indicate that logical channels using different wireless access technologies correspond respectively to different logical channel groups;
receiving a Buffer Status Report (BSR) reported by the sidelink user equipment based on the configuration information of logical channel groups of the sidelink interface;
allocating transmission resources of the sidelink interface to the sidelink user equipment on physical resources corresponding to a determined wireless access technology according to a correspondence between logical channel groups and wireless access technologies;
   wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology;
   when the configuration information of logical channel groups of the sidelink interface is the mapping relationship between QoS parameters of the sidelink interface and logical channel group identifiers, the auxiliary information includes all or a part of QoS parameters corresponding to each logical channel of the sidelink interface of the sidelink user equipment;
when the configuration information of logical channel groups of the sidelink interface is the mapping relationship between logical channels of the sidelink interface and logical channel group identifiers, the auxiliary information includes each logical channel identifier of the sidelink interface of the sidelink user equipment and corresponding QoS parameters, and a wireless access technology that each logical channel of the sidelink interface of the sidelink user equipment expects to use.

In a third aspect, the application provides a sidelink user equipment including a processor and a memory, wherein the processor is configured to read a program in the memory and perform the process of:
receiving configuration information of logical channel groups of a sidelink interface transmitted by a resource allocation management node, wherein the configuration information of logical channel groups of the sidelink interface is used to indicate that logical channels using different wireless access technologies correspond respectively to different logical channel groups;
determining a logical channel group corresponding to a logical channel of the sidelink interface according to the configuration information of logical channel groups of the sidelink interface.

In a fourth aspect, the application provides a resource allocation management node including a processor and a memory, wherein the processor is configured to read a program in the memory and perform the process of:
transmitting configuration information of logical channel groups of a sidelink interface to a sidelink user equipment to indicate that logical channels using different wireless access technologies correspond respectively to different logical channel groups;
receiving a BSR reported by the sidelink user equipment based on the configuration information of logical channel groups of the sidelink interface;
allocating transmission resources of the sidelink interface to the sidelink user equipment on physical resources corresponding to a determined wireless access technology according to a correspondence between logical channel groups and wireless access technologies.

In a fifth aspect, an embodiment of the application provides a computer storage medium storing a computer program thereon, where the program, when executed by a processor, causes the processor to perform any solution in the first aspect described above.

In a sixth aspect, an embodiment of the application provides a computer storage medium storing a computer program thereon, where the program, when executed by a processor, causes the processor to perform any solution in the second aspect described above.

The methods for allocating sidelink resource and apparatuses of the embodiments of the application have the following beneficial effects.

It can be ensured that the resources allocated by the sidelink resource allocation node can match with the wireless access technology selected by each logical channel on the sidelink interface of a user equipment, thereby ensuring that the sidelink data can be transmitted by using the reasonable wireless access technology.

### Brief Description of the Drawings

Fig. 1 is a communication schematic diagram of a sidelink user equipment in the prior art;
Fig. 2 is a schematic diagram of a resource allocation system for a sidelink interface according to an embodiment of the application;
Fig. 3 is a flow chart of interaction between a sidelink user equipment and a resource allocation management node according to an embodiment of the application;
Fig. 4 is a flow chart of interaction between a sidelink user equipment and a resource allocation management node according to another embodiment of the application;
Fig. 5 is a schematic structural diagram of a first resource allocation management node according to an embodiment of the application;
Fig. 6 is a schematic structural diagram of a first sidelink user equipment according to an embodiment of the application;
Fig. 7 is a schematic structural diagram of a second resource allocation management node according to an embodiment of the application;
Fig. 8 is a schematic structural diagram of a second sidelink user equipment according to an embodiment of the application;
Fig. 9 is a schematic flowchart of a method for allocating sidelink resource according to an embodiment of the application; and
Fig. 10 is a schematic flowchart of a method for allocating sidelink resource according to an embodiment of the application.

### Detailed Description

In the following, some terms in the embodiments of the application are explained so as to facilitate the understanding of those skilled in the art.
(1) In the embodiments of the application, the nouns "network" and "system" are often used alternately, but those skilled in the art may understand the meaning thereof.
(2) The term "a plurality of" in the embodiments of the application refers to two or more, and other quantifiers are similar thereto.
(3) "and/or" describes the association relationship of the associated objects, and indicates that there may be three relationships, for example, A and/or B may represent: only A, both A and B, and only B. The character "/" generally indicates that the associated objects have a kind of "or" relationship.

In the embodiments of the application, a sidelink resource allocation management node transmits the configuration information of logical channel groups of a sidelink interface to a sidelink user equipment, and thus can ensure that the resources allocated by the sidelink resource allocation node can match with the wireless access technology selected by each logical channel on the sidelink interface of the user equipment, and thus ensure that the sidelink data can be transmitted by using the reasonable wireless access technology.

The sidelink user equipment in the embodiments of the application is a device with the wireless communication function in the LTE V2X system, and can be deployed on land, including indoor or outdoor, handheld or vehicle-mounted; or can also be deployed on the water (such as ship, etc.); or can also be deployed in the air (e.g., on the airplane, balloon and satellite, etc.). The user equipment may be: a mobile phone, a pad, a computer with wireless transceiver function, a Virtual Reality (VR) user equipment, an Augmented Reality (AR) user equipment, a wireless user equipment in the industrial control, a wireless user equipment in the self driving, a wireless user equipment in the remote medical, a wireless user equipment in the smart grid, a wireless user equipment in the transportation safety, a wireless user equipment in the smart city, a wireless user equipment in the smart home, etc.; or may be various forms of UE, Mobile Station (MS), user equipment device.

The resource allocation management node may be a base station, which is a device that provides the wireless communication function for the user equipment, including but not limited to: gNB in 5G, Radio Network Controller (RNC), Node B (NB), Base Station Controller (BSC), Base Transceiver Station (BTS), home base station (for example, home evolved NodeB or Home Node B (HNB)), Base Band Unit (BBU), Transmission and Reception Point (TRP), Transmitting Point (TP), mobile switching center, etc. The base station in the application may also be a device that provides the wireless communication function for the user equipment in other communication systems that may appear in the future.

The resource allocation management node may also be a user equipment as the cluster head in a communication group.

In order to make the objects, technical solutions and advantages of the application clearer, the application will be further illustrated below in details with reference to the accompanying figures. Obviously the described embodiments are merely a part of the embodiments of the application but not all the embodiments. Based upon the embodiments of the application, all of other embodiments obtained by those ordinary skilled in the art without creative work pertain to the protection scope of the application.

When the case that the Uu interface assists in the resource allocation of the sidelink interface is discussed in the 3GPP NR V2X project document, as shown in Table 1, three scenarios are proposed:

**Table 1**

| Scenario | Uu link | Sidelink |
|---|---|---|
| 1 | LTE | NR |
| 2 | NR | NR |
| 3 | NR | LTE |

As can be seen from the above table, the user equipments with high capability can support multiple wireless access technologies (such as LTE Rel-14 wireless access technology, LTE Rel-15 wireless access technology and NR wireless access technology) on the sidelink interface. For a user equipment that supports two or more wireless access technologies at the same time, the user equipment can select the wireless access technology based on the logical channel when it has a sidelink communication requirement, that is, the wireless access technologies used by different logical channels on the sidelink interface may be different. In this case, it is necessary to consider how to ensure that the resources allocated by the sidelink resource allocation node can match with the wireless access technology selected by each logical channel on the sidelink interface of a user equipment.

As shown in Fig. 2, a resource allocation system for a sidelink interface in an embodiment of the application includes:
a resource allocation management node 10 configured to: transmit the configuration information of logical channel groups of a sidelink interface to a sidelink user equipment to indicate that logical channels using different wireless access technologies correspond respectively to different logical channel groups; receive a Buffer Status Report (BSR) reported by the sidelink user equipment based on the configuration information of logical channel groups of the sidelink interface; and allocate transmission resources of the sidelink interface to the sidelink user equipment on physical resources corresponding to a determined wireless access technology according to a correspondence between logical channel groups and wireless access technologies;
a sidelink user equipment 20 configured to receive the configuration information of logical channel groups of the sidelink interface transmitted by the resource allocation management node, wherein the configuration information of logical channel groups of the sidelink interface is used to indicate that logical channels using different wireless access technologies correspond respectively to different logical channel groups; and determine a logical channel group corresponding to a logical channel of the sidelink interface according to the configuration information of logical channel groups of the sidelink interface.

The sidelink user equipment in the embodiment of the application receives the configuration information of logical channel groups of the sidelink interface transmitted by the sidelink resource allocation management node, which can ensure that all logical channels in the same logical channel group use the same wireless access technology.

Optionally, the sidelink user equipment is further configured to: report a Buffer Status Report (BSR) according to the determined logical channel group corresponding to the logical channel of the sidelink interface; and receive transmission resources of the sidelink interface allocated by a radio resource allocation management node according to the BSR.

When reporting the BSR, the sidelink user equipment can report BSRs corresponding to different wireless access technologies by using a same BSR Media Access Control Control Element (MAC CE), or report BSRs corresponding to different wireless access technologies respectively by using independent BSR MAC CEs. Specifically, the corresponding reporting mode can be selected according to the occupancy of the BSR MAC CEs.

The resource allocation management node receives BSRs corresponding to different wireless access technologies reported by the sidelink user equipment using a same BSR MAC CE, or receives BSRs corresponding to different wireless access technologies reported respectively by the sidelink user equipment using independent BSR MAC CEs.

In an implementation, the above configuration information of logical channel groups includes two types of information, wherein one is logical channel group identifiers corresponding to different wireless access technologies, and the other is the logical channel group parameter information corresponding to logical channel group identifiers. The logical channel group parameter information may be the related parameter information of the logical channel in the radio access technology corresponding to the logical channel identifier.

The sidelink user equipment can determine the logical channel group identifier corresponding to the related parameter information of the logical channel of the local sidelink interface according to each logical channel group identifier and the corresponding logical channel parameter information combined with the related parameter information of the logical channel of the local sidelink interface, and report the determined logical channel group identifier to the resource allocation management node, so that the resource allocation management node knows the wireless access technology supported by the logical channel of the sidelink interface of the sidelink user equipment, and selects sidelink interface resources for allocation from the physical resources corresponding to the wireless access technology.

The resource allocation system for the sidelink interface according to the application can ensure that the resources allocated by the sidelink resource allocation node can match with the wireless access technology selected by each logical channel on the sidelink interface of a user equipment, and thus ensure that the sidelink data can be transmitted by using the reasonable wireless access technology.

As an optional implementation, the above configuration information of logical channel groups of the sidelink interface is a mapping relationship between QoS (Quality of Service) parameters of the sidelink interface and logical channel group identifiers, and logical channels in a same logical channel group only correspond to a kind of wireless access technology.

Since different wireless access technologies correspond to different logical channels and each logical channel has corresponding QoS parameter, in order to ensure that all logical channels in the same logical channel group use the same wireless access technology, the resource allocation management node can configure a mapping relationship between QoS parameters and logical channel group identifiers respectively based on the QoS parameters of all logical channels corresponding to each wireless access technology, and the logical channel group identifiers corresponding to different wireless access technologies are different. The configured logical channel group identifiers and corresponding QoS parameters are carried in the configuration information of logical channel groups of the sidelink interface and indicated to the sidelink user equipment.

Optionally, the sidelink user equipment reports the auxiliary information to the resource allocation management node, wherein the auxiliary information includes all or a part of QoS parameters corresponding to each logical channel of the sidelink interface of the sidelink user equipment.

The resource allocation management node receives the auxiliary information reported by the sidelink user equipment, and can determine, according to all or a part of QoS parameters corresponding to each logical channel of the sidelink interface of the sidelink user equipment in the auxiliary information, a mapping relationship between all or a part of QoS parameters and logical channel group identifiers, and indicate it the sidelink user equipment.

In an implementation, the above mapping relationship between QoS parameters of the sidelink interface and logical channel group identifiers may be, but not limited to, any one of the followings.
1) A mapping relationship between ProSe Per-Packet Priority (PPPP) and logical channel group identifier.
   In the LTE Rel-14 wireless access technology, the QoS parameters of logical channels of different wireless access technologies include PPPP parameter, so the mapping relationship between QoS parameter of the LTE Rel-14 sidelink interface and logical channel group identifier can be the mapping relationship between PPPP and Logical Channel Group IDentifier (LCG ID).
2) A mapping relationship between ProSe Per-Packet Reliability (PPPR) and logical channel group identifier.
   In the LTE Rel-15 wireless access technology, the QoS parameters of logical channels of different wireless access technologies include PPPP and/or PPPR parameters. Therefore, the mapping relationship between QoS parameter of the LTE Rel-15 sidelink interface and logical channel group identifier can be the mapping relationship between PPPP and/or PPPR and LCG ID.
3) A mapping relationship between New Radio (NR) QoS parameters and logical channel group identifiers.

In the NR wireless access technology, the QoS parameters of logical channels of different wireless access technologies include 5QI parameter. Therefore, the mapping relationship between QoS parameters of the NR sidelink interface and logical channel group identifiers can be the mapping relationship between 5QI and LCG ID.

When the above configuration information of logical channel groups of the sidelink interface sent by the resource allocation management node is the mapping relationship between QoS parameters of the sidelink interface and logical channel group identifiers, the sidelink user equipment 20 determines a mapping relationship between logical channels of the sidelink interface and logical channel group identifiers corresponding to wireless access technologies according to QoS parameters of each logical channel of the sidelink interface of the sidelink user equipment and the mapping relationship between logical channel group identifiers and QoS parameters after receiving the above configuration information of logical channel groups of the sidelink interface.

In an implementation, the logical channels of the sidelink user equipment 20 on the sidelink interface are known, and a mapping relationship table between logical channels and QoS parameters is stored locally. The sidelink user equipment 20 can determine the QoS parameter of each logical channel, and compare the QoS parameter of each logical channel with the QoS parameter corresponding to each logical channel group identifier. If it is determined that the QoS parameter of a certain logical channel meets all the requirements of the QoS parameter corresponding to a certain logical channel group identifier, it is determined that the logical channel uses the wireless access technology corresponding to the logical channel group identifier.

As another optional implementation, the above configuration information of logical channel groups of the sidelink interface is a mapping relationship between logical channels of the sidelink interface and logical channel group identifiers, and logical channels in a same logical channel group only correspond to a kind of wireless access technology.

During this implementation, since the resource allocation management node does not know the logical channels of the sidelink interface local to the sidelink user equipment, there is a need for the sidelink user equipment to report the auxiliary information. As an optional implementation, the sidelink user equipment is further configured to report the auxiliary information to the resource allocation management node, wherein the auxiliary information includes each logical channel identifier of the sidelink interface of the sidelink user equipment and its corresponding QoS parameters.

The resource allocation management node is configured to receive the auxiliary information reported by the sidelink user equipment, wherein the auxiliary information includes each logical channel identifier of the sidelink interface of the sidelink user equipment and its corresponding QoS parameters; and determine the configuration information of logical channel groups of the sidelink interface according to the auxiliary information reported by the sidelink user equipment.

In an implementation, since the resource allocation management node stores a mapping table between different logical channels and corresponding QoS parameters locally, the corresponding logical channel can be determined according to the logical channel identifier reported by the sidelink user equipment through the mapping table, and the logical channel group corresponding to logical channels of the sidelink interface of the sidelink user equipment is determined according to logical channels corresponding to different wireless access technologies, so that the logical channels of the sidelink interface of the sidelink user equipment and the corresponding logical channel group identifiers are used as the configuration information of logical channel groups of the sidelink interface and indicated to the sidelink user equipment.

As another optional implementation, the auxiliary information reported by the sidelink user equipment to the resource allocation management node includes each logical channel identifier of the sidelink interface of the sidelink user equipment and its corresponding QoS parameters, and the wireless access technology that each logical channel expects to use.

In an implementation, since the resource allocation management node stores a mapping table between different logical channels and corresponding QoS parameters locally, the logical channels to which the QoS reported by the sidelink user equipment is mapped can be determined according to the mapping table, the logical channel group corresponding to logical channels of the sidelink interface of the sidelink user equipment is determined according to logical channels corresponding to different wireless access technologies, and a mapping relationship between logical channels of the sidelink interface and logical channel group identifiers corresponding to the expected wireless access technology is determined, so that the mapping relationship between logical channels of the sidelink interface and logical channel group identifiers corresponding to the expected wireless access technology is used as the configuration information of logical channel groups of the sidelink interface and indicated to the sidelink user equipment.

Optionally, the sidelink user equipment determines the logical channel group identifier corresponding to a local logical channel based on the configuration information of logical channel groups of the sidelink interface, organizes the Sidelink BSR according to the local logical channel and the corresponding logical channel group identifier, and reports the Sidelink BSR when the trigger condition of Sidelink BSR reporting is satisfied, so that the resource allocation management node knows the local logical channel of the sidelink user equipment and the corresponding logical channel group identifier.

Optionally, after the sidelink resource allocation management node receives the Sidelink BSR reported by the user equipment, the process further includes: determining the wireless access technology corresponding to the logical channel of the sidelink interface of the sidelink user equipment based on a correspondence between logical channel groups and wireless access technologies according to the Sidelink BSR, and allocating transmission resources of the sidelink interface to the sidelink user equipment on physical resources corresponding to the determined wireless access technology.

There are two ways for the sidelink resource allocation management node to determine the correspondence between wireless access technologies and physical resources.

In one way, the correspondence between wireless access technologies and physical resources is pre-configured to the sidelink resource allocation management node and the user equipment, and the sidelink resource allocation management node determines the physical resources corresponding to the wireless access technology according to the pre-configured information, where the scheduling signaling transmitted by the resource allocation management node to the sidelink user equipment or the PDSCH (Physical Downlink Shared Chanel) scheduled by the scheduling signaling does not need to carry the indication information of wireless access technology.

In another way, the resource allocation management node determines the correspondence between wireless access technologies and physical resources dynamically. In this case, the resource allocation management node indicates a mapping relationship between physical resources and wireless access technologies or QoS parameters or logical channels allocated for the sidelink interface to the sidelink user equipment through the sidelink interface scheduling signaling transmitted on the Uu interface or the PDSCH scheduled by the sidelink interface scheduling signaling transmitted on the Uu interface.

Optionally, the sidelink user equipment receives the mapping relationship between physical resources allocated for the sidelink interface and wireless access technologies, or physical resources allocated for the sidelink interface and QoS parameters, or physical resources allocated for the sidelink interface and logical channels indicated by the resource allocation management node through the sidelink interface scheduling signaling transmitted on the Uu interface or the PDSCH scheduled by the sidelink interface scheduling signaling transmitted on the Uu interface.

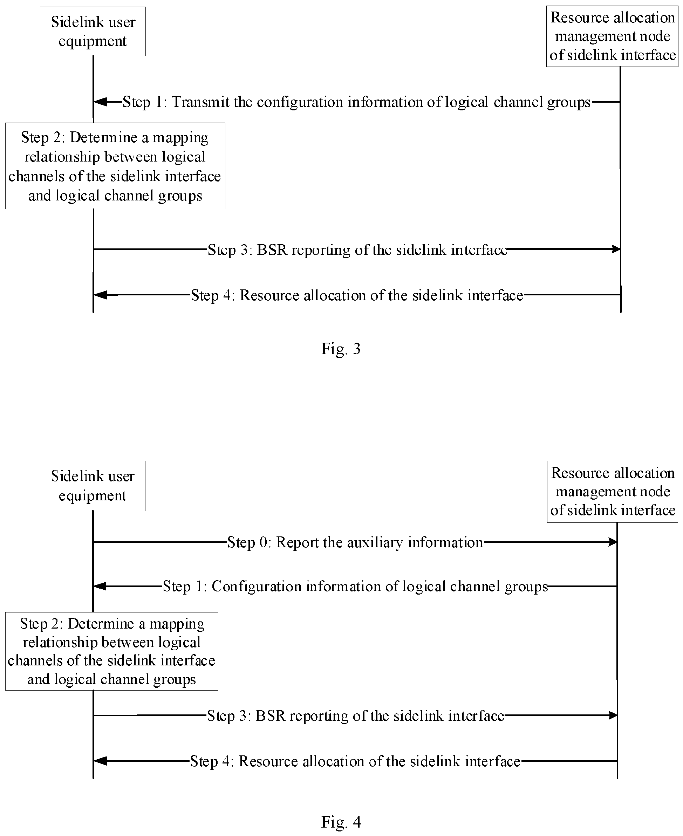

As shown in Fig. 3, a flowchart of the interaction between the resource allocation management node and the sidelink user equipment in this embodiment mainly includes the following steps.

Step 1: the sidelink resource allocation management node transmits the configuration information of logical channel groups of a sidelink interface to the sidelink user equipment, where the configuration information of logical channel groups of the sidelink interface includes the QoS parameters of logical channels and the corresponding logical channel group identifiers.

Step 2: the sidelink user equipment determines a mapping relationship between logical channels of the sidelink interface and logical channel groups.

After the sidelink user equipment receives the configuration information of logical channel groups of the sidelink interface transmitted by the sidelink resource allocation management node, when the configuration information includes the QoS parameters of logical channels and the corresponding logical channel group identifiers, then a mapping relationship between logical channels and logical channel group identifiers is determined according to the local mapping relationship between logical channels of the sidelink interface and QoS parameters. For example, the QoS parameter of the logical channel is PPPP, so the logical channel group identifier corresponding to the logical channel is determined according to the mapping relationship between PPPP and logical channel group identifier indicated in the indication information; when the QoS parameter of the logical channel is 5QI, then the logical channel group identifier corresponding to the logical channel is determined according to the mapping relationship between 5QI and logical channel group identifier indicated in the indication information.

Step 3: the sidelink user equipment reports the BSR through the sidelink interface.

The sidelink user equipment organizes the Sidelink BSR based on the configuration information of logical channel groups of the sidelink interface, and reports the Sidelink BSR when the trigger condition of Sidelink BSR reporting is satisfied.

Step 4: the resource allocation management node allocates sidelink interface resource for the sidelink user equipment.

After the sidelink resource allocation management node receives the Sidelink BSR reported by the user equipment, the process further includes: allocating transmission resources of the sidelink interface to the user equipment on physical resources corresponding to each wireless access technology based on a correspondence between logical channel groups and wireless access technologies.

There may be two ways to determine the correspondence between logical channel groups and wireless access technologies, which can refer to the description of the foregoing embodiments and will not be repeated here.

As shown in Fig. 4, a flowchart of the interaction between the resource allocation management node and the sidelink user equipment in another embodiment mainly includes the following steps.

Step 0: the sidelink user equipment reports the auxiliary information.

The auxiliary information includes at least each logical channel identifier of the sidelink interface of the user equipment and its corresponding QoS parameters, or includes at least each logical channel identifier of the sidelink interface of the sidelink user equipment and its corresponding QoS parameters, and the wireless access technology that each logical channel expects to use.

For the former, the QoS parameters used by different wireless access technologies may be different, and the sidelink resource allocation management node can determine the wireless access technology corresponding to the logical channel of the sidelink user equipment according to the difference of QoS parameters or the mapping relationship between QoS parameters and wireless access technologies stored by the sidelink resource allocation management node; and for the latter, the sidelink resource allocation management node can determine the wireless access technology corresponding to the logical channel directly according to the wireless access technology reported by the user equipment.

Step 1: the sidelink resource allocation management node transmits the configuration information of logical channel groups of a sidelink interface to the sidelink user equipment.

The configuration information of logical channel groups of the sidelink interface transmitted by the sidelink resource allocation management node is a mapping relationship between logical channels of the sidelink interface and logical channel group identifiers, and it is necessary to ensure that the logical channels using different wireless access technologies correspond to different logical channel group identifiers.

Step 2: the sidelink user equipment determines a mapping relationship between sidelink logical channels and logical channel groups.

After receiving the configuration information of logical channel groups of the sidelink interface transmitted by the sidelink resource allocation management node, the sidelink user equipment determines a mapping relationship between logical channels and logical channel group identifiers.

Step 3: the sidelink user equipment reports the BSR through the sidelink interface.

The sidelink user equipment organizes the Sidelink BSR based on the indication information, and reports the Sidelink BSR when the trigger condition of Sidelink BSR reporting is satisfied.

Step 4: the resource allocation management node allocates sidelink interface resource for the sidelink user equipment.

After the sidelink resource allocation management node receives the Sidelink BSR reported by the user equipment, the process further includes: allocating transmission resources of the sidelink interface to the user equipment on physical resources corresponding to each wireless access technology based on a correspondence between logical channel groups and wireless access technologies.

There may be two ways to determine the correspondence between logical channel groups and wireless access technologies, which can refer to the description of the foregoing embodiments and will not be repeated here.

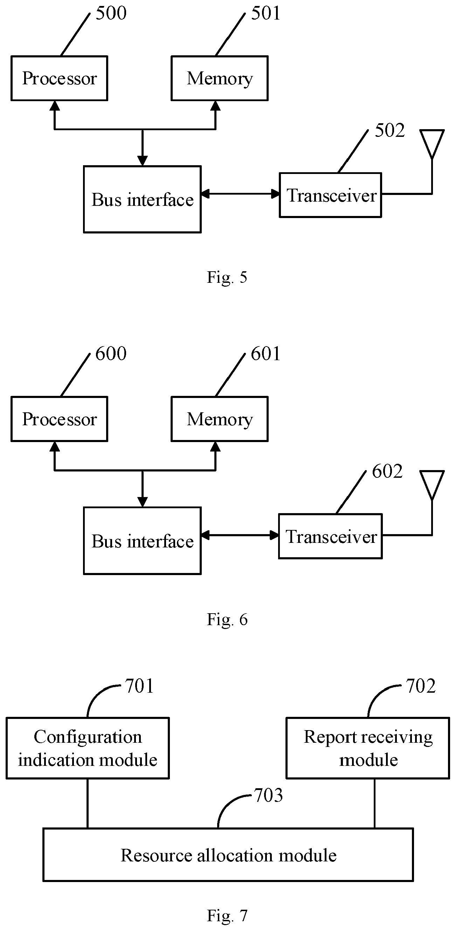

As shown in Fig. 5, a first resource allocation management node of an embodiment of the application includes: a processor 500, a memory 501 and a transceiver 502.

The processor 500 is responsible for managing the bus architecture and general processing, and the memory 501 may store the data used by the processor 500 when performing the operations. The transceiver 502 is configured to receive and transmit the data under the control of the processor 500.

The bus architecture may include any numbers of interconnected buses and bridges, and specifically link various circuits of one or more processors represented by the processor 500 and the memory represented by the memory 501. The bus architecture may further link various other circuits such as peripheral device, voltage regulator and power management circuit, which are all well known in the art and thus will not be further described again herein. The bus interface provides an interface. The processor 500 is responsible for managing the bus architecture and general processing, and the memory 501 may store the data used by the processor 500 when performing the operations.

The procedure disclosed by the embodiment of the application may be applied in the processor 500 or implemented by the processor 500. In the implementation process, each step of the signal processing flow may be completed by the integrated logic circuit of hardware in the processor 500 or the instruction in the form of software. The processor 500 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the application. The general-purpose processor may be a microprocessor or any conventional processor or the like. The steps of the method disclosed in combination with the embodiments of the application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 501, and the processor 500 reads the information in the memory 501 and completes the steps of the signal processing flow in combination with its hardwares.

The processor 500 is configured to read a program in the memory 501 and perform the process of:
transmitting the configuration information of logical channel groups of a sidelink interface to a sidelink user equipment to indicate that logical channels using different wireless access technologies correspond respectively to different logical channel groups;
receiving a Buffer Status Report (BSR) reported by the sidelink user equipment based on the configuration information of logical channel groups of the sidelink interface;
allocating transmission resources of the sidelink interface to the sidelink user equipment on physical resources corresponding to a determined wireless access technology according to a correspondence between logical channel groups and wireless access technologies.

Optionally, the processor is configured to: report BSRs corresponding to different wireless access technologies by using a same BSR MAC CE, or report BSRs corresponding to different wireless access technologies respectively by using independent BSR MAC CEs.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the processor is further configured to: report the auxiliary information to the resource allocation management node, wherein the auxiliary information includes all or a part of QoS parameters corresponding to each logical channel of a sidelink interface of a sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and it is necessary to ensure that logical channels in a same logical channel group can only correspond to a kind of wireless access technology.

Optionally, the processor is further configured to: receive the auxiliary information reported by the sidelink user equipment, wherein the auxiliary information includes at least each logical channel identifier of a sidelink interface of the sidelink user equipment and its corresponding QoS parameters; and determine the configuration information of logical channel groups of the sidelink interface according to the auxiliary information reported by the sidelink user equipment.

Optionally, the auxiliary information further includes a wireless access technology that each logical channel of the sidelink interface of the sidelink user equipment expects to use.

Optionally, the processor is further configured to: determine a mapping relationship between logical channels of the sidelink interface and logical channel group identifiers according to QoS parameters of each logical channel of the sidelink interface of the sidelink user equipment and a mapping relationship between wireless access technologies and QoS parameters.

Optionally, the processor is further configured to: pre-configure a mapping relationship between wireless access technologies and physical resources; or determine a mapping relationship between wireless access technologies and physical resources dynamically.

Optionally, the processor is further configured to: indicate a mapping relationship between physical resources allocated for the sidelink interface and wireless access technologies or QoS parameters or logical channels to the sidelink user equipment through the sidelink interface scheduling signaling transmitted on a Uu interface or a PDSCH scheduled by the sidelink interface scheduling signaling transmitted on the Uu interface.

Optionally, the resource allocation management node is a network-side device or a user equipment as a cluster head in a communication group.

As shown in Fig. 6, a first sidelink user equipment of an embodiment of the application includes: a processor 600, a memory 601 and a transceiver 602.

The processor 600 is responsible for managing the bus architecture and general processing, and the memory 601 may store the data used by the processor 600 when performing the operations. The transceiver 602 is configured to receive and transmit the data under the control of the processor 600.

The bus architecture may include any numbers of interconnected buses and bridges, and specifically link various circuits of one or more processors represented by the processor 600 and the memory represented by the memory 601. The bus architecture may further link various other circuits such as peripheral device, voltage regulator and power management circuit, which are all well known in the art and thus will not be further described again herein. The bus interface provides an interface. The processor 600 is responsible for managing the bus architecture and general processing, and the memory 601 may store the data used by the processor 600 when performing the operations.

The procedure disclosed by the embodiment of the application may be applied in the processor 600 or implemented by the processor 600. In the implementation process, each step of the signal processing flow may be completed by the integrated logic circuit of hardware in the processor 600 or the instruction in the form of software. The processor 600 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in the embodiments of the application. The general-purpose processor may be a microprocessor or any conventional processor or the like. The steps of the method disclosed in combination with the embodiments of the application may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 601, and the processor 600 reads the information in the memory 601 and completes the steps of the signal processing flow in combination with its hardware.

The processor 600 is configured to read a program in the memory 601 and perform the process of:
receiving the configuration information of logical channel groups of a sidelink interface transmitted by a resource allocation management node, wherein the configuration information of logical channel groups of the sidelnk interface is used to indicate that logical channels using different wireless access technologies correspond respectively to different logical channel groups;
determining a logical channel group corresponding to a logical channel of the sidelink interface according to the configuration information of logical channel groups of the sidelink interface.

Optionally, the above processor is further configured to: report a BSR according to the determined logical channel group corresponding to the logical channel of the sidelink interface; and receive transmission resources of the sidelink interface allocated by a radio resource allocation management node according to the BSR.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the processor is further configured to: receive the auxiliary information reported by the sidelink user equipment, wherein the auxiliary information includes all or a part of QoS parameters corresponding to each logical channel of the sidelink interface of the sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and logical channels in a same logical channel group only correspond to a kind of wireless access technology.

Optionally, the processor is further configured to: report the auxiliary information to the resource allocation management node, wherein the auxiliary information includes each logical channel identifier of the sidelink interface of the sidelink user equipment and corresponding QoS parameters.

Optionally, the auxiliary information further includes a wireless access technology that each logical channel of the sidelink interface of the sidelink user equipment expects to use.

Optionally, the processor is further configured to: receive a mapping relationship between physical resources allocated for the sidelink interface and wireless access technologies, or physical resources allocated for the sidelink interface and QoS parameters, or physical resources allocated for the sidelink interface and logical channels indicated by the resource allocation management node through the sidelink interface scheduling signaling transmitted on a Uu interface or a PDSCH scheduled by the sidelink interface scheduling signaling transmitted on the Uu interface.

As shown in Figure 7, a second resource allocation management node of an embodiment of the application includes:
a configuration indication module 701 configured to transmit the configuration information of logical channel groups of a sidelink interface to a sidelink user equipment to indicate that logical channels using different wireless access technologies correspond respectively to different logical channel groups;
a report receiving module 702 configured to receive a BSR reported by the sidelink user equipment based on the configuration information of logical channel groups of the sidelink interface;
a resource allocation module 703 configured to allocate transmission resources of the sidelink interface to the sidelink user equipment on physical resources corresponding to a determined wireless access technology according to a correspondence between logical channel groups and wireless access technologies.

Optionally, the report receiving module 702 receives BSRs corresponding to different wireless access technologies reported by the sidelink user equipment using a same BSR MAC CE, or receives BSRs corresponding to different wireless access technologies reported respectively by the sidelink user equipment using independent BSR MAC CEs.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the resource allocation management node further includes: a parameter receiving module configured to receive the auxiliary information reported by the sidelink user equipment, wherein the auxiliary information includes all or a part of QoS parameters corresponding to each logical channel of the sidelink interface of the sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and it is necessary to ensure that logical channels in a same logical channel group can only correspond to a kind of wireless access technology.

Optionally, the configuration indication module is further configured to: receive the auxiliary information reported by the sidelink user equipment, wherein the auxiliary information includes at least each logical channel identifier of the sidelink interface of the sidelink user equipment and its corresponding QoS parameters; and determine the configuration information of logical channel groups of the sidelink interface according to the auxiliary information reported by the sidelink user equipment.

Optionally, the auxiliary information further includes a wireless access technology that each logical channel of the sidelink interface of the sidelink user equipment expects to use.

Optionally, the resource allocation module 703 is further configured to: determine a mapping relationship between logical channels of the sidelink interface and logical channel group identifiers according to each logical channel identifier of the sidelink interface of the sidelink user equipment, its corresponding QoS parameters, and a mapping relationship between wireless access technologies and QoS parameters.

Optionally, the resource allocation module 703 is further configured to: pre-configure a mapping relationship between wireless access technologies and physical resources; or determine a mapping relationship between wireless access technologies and physical resources dynamically.

Optionally, the resource allocation module 703 is further configured to: indicate a mapping relationship between physical resources allocated for the sidelink interface and wireless access technologies or QoS parameters or logical channels to the sidelink user equipment through the sidelink interface scheduling signaling transmitted on a Uu interface or a PDSCH scheduled by the sidelink interface scheduling signaling transmitted on the Uu interface.

Optionally, the resource allocation management node is a network-side device or a user equipment as a cluster head in a communication group.

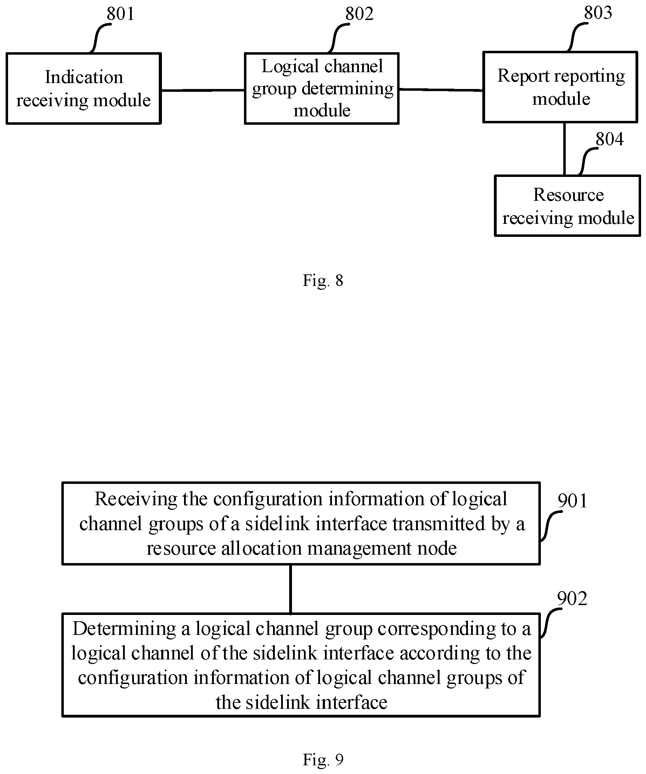

As shown in Fig. 8, a second sidelink user equipment of an embodiment of the application includes:
an indication receiving module 801 configured to receive the configuration information of logical channel groups of a sidelink interface transmitted by a resource allocation management node, wherein the configuration information of logical channel groups of the sidelink interface is used to indicate that logical channels using different wireless access technologies correspond respectively to different logical channel groups;
a logical channel group determining module 802 configured to determine a logical channel group corresponding to a logical channel of the sidelink interface according to the configuration information of logical channel groups of the sidelink interface.

Optionally, the sidelink user equipment further includes: a report reporting module 803 configured to report a Buffer Status Report (BSR) according to the determined logical channel group corresponding to the logical channel of the sidelink interface; and a resource receiving module 804 configured to receive transmission resources of the sidelink interface allocated by a radio resource allocation management node according to the BSR.

Optionally, the report reporting module 803 reports BSRs corresponding to different wireless access technologies by using a same BSR MAC CE, or reports BSRs corresponding to different wireless access technologies respectively by using independent BSR MAC CEs.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the sidelink user equipment further includes: a first auxiliary information reporting module configured to report the auxiliary information to the resource allocation management node, wherein the auxiliary information includes all or a part of QoS parameters corresponding to each logical channel of the sidelink interface of the sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and logical channels in a same logical channel group only correspond to a kind of wireless access technology.

Optionally, the sidelink user equipment further includes: a second auxiliary information reporting module configured to report the auxiliary information to the resource allocation management node, wherein the auxiliary information includes each logical channel identifier of the sidelink interface of the sidelink user equipment and its corresponding QoS parameters.

Optionally, the auxiliary information further includes a wireless access technology that each logical channel of the sidelink interface of the sidelink user equipment expects to use.

Optionally, the resource receiving module is further configured to: receive a mapping relationship between physical resources allocated for the sidelink interface and wireless access technologies, or physical resources allocated for the sidelink interface and QoS parameters, or physical resources allocated for the sidelink interface and logical channels indicated by the resource allocation management node through the sidelink interface scheduling signaling transmitted on a Uu interface or a PDSCH scheduled by the sidelink interface scheduling signaling transmitted on the Uu interface.

An embodiment of the application provides a readable storage medium that is a non-volatile readable storage medium and includes program codes. When the program codes run on a computing device, the program codes are configured to cause the computing device to perform the actions of the resource allocation management node to perform the resource allocation described above.

An embodiment of the application provides a readable storage medium that is a non-volatile readable storage medium and includes program codes. When the program codes run on a computing device, the program codes are configured to cause the computing device to perform the actions of the sidelink user equipment to determine transmission resources described above.

An embodiment of the application provides a computer program product containing instructions, which cause a computer to perform the actions of the resource allocation management node to perform the resource allocation described above when running on the computer.

An embodiment of the application provides a computer program product containing instructions, which cause a computer to perform the actions of the sidelink user equipment to determine resources described above when running on the computer.

Based upon the same inventive concept, an embodiment of the application further provides a method for allocating sidelink resource. Since the device corresponding to this method is the sidelink user equipment in the resource allocation system of sidelink interface in the embodiments of the application, and the principle solving the problem of this method is similar to that of the device, the implementations of this method may refer to the implementations of the system, and the repeated description thereof will be omitted here.

As shown in Fig. 9, the method for allocating silelink resource in the embodiment of the application includes the following steps.

Step 901: receiving the configuration information of logical channel groups of a sidelink interface transmitted by a resource allocation management node, wherein the configuration information of logical channel groups of the sidelink interface is used to indicate that logical channels using different wireless access technologies correspond respectively to different logical channel groups.

Step 902: determining a logical channel group corresponding to a logical channel of the sidelink interface according to the configuration information of logical channel groups of the sidelink interface.

Optionally, the method further includes: reporting a Buffer Status Report (BSR) according to the determined logical channel group corresponding to the logical channel of the sidelink interface; and receiving transmission resources of the sidelink interface allocated by a radio resource allocation management node according to the BSR.

Optionally, the step of reporting the BSR includes: reporting BSRs corresponding to different wireless access technologies by using a same BSR MAC CE, or reporting BSRs corresponding to different wireless access technologies respectively by using independent BSR MAC CEs.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the method further includes: reporting the auxiliary information to the resource allocation management node, wherein the auxiliary information includes all or a part of QoS parameters corresponding to each logical channel of the sidelink interface of the sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and logical channels in a same logical channel group only correspond to a kind of wireless access technology.

Optionally, the method further includes: reporting the auxiliary information to the resource allocation management node, wherein the auxiliary information includes each logical channel identifier of the sidelink interface of the sidelink user equipment and its corresponding QoS parameters.

Optionally, the auxiliary information further includes a wireless access technology that each logical channel of the sidelink interface of the sidelink user equipment expects to use.

Optionally, the method further includes: receiving a mapping relationship between physical resources allocated for the sidelink interface and wireless access technologies, or physical resources allocated for the sidelink interface and QoS parameters, or physical resources allocated for the sidelink interface and logical channels indicated by the resource allocation management node through the sidelink interface scheduling signaling transmitted on a Uu interface or a PDSCH scheduled by the sidelink interface scheduling signaling transmitted on the Uu interface.

Based upon the same inventive concept, an embodiment of the application further provides a method for allocating sidelink resource. Since the device corresponding to this method is the resource allocation management node in the resource allocation system of sidelink interface in the embodiments of the application, and the principle solving the problem of this method is similar to that of the device, the implementations of this method may refer to the implementations of the system, and the repeated description thereof will be omitted here.

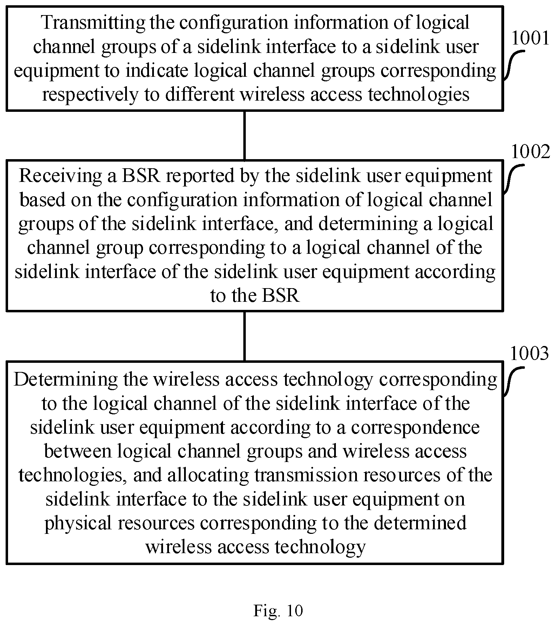

As shown in Fig. 10, the method for allocating sidelink resource in the embodiment of the application includes the following steps.

Step 1001: transmitting the configuration information of logical channel groups of a sidelink interface to a sidelink user equipment to indicate that logical channels using different wireless access technologies correspond respectively to different logical channel groups.

Step 1002: receiving a BSR reported by the sidelink user equipment based on the configuration information of logical channel groups of the sidelink interface.

Step 1003: allocating transmission resources of the sidelink interface to the sidelink user equipment on physical resources corresponding to a determined wireless access technology according to a correspondence between logical channel groups and wireless access technologies.

Optionally, the step of receiving the BSR reported by the sidelink user equipment includes: receiving BSRs corresponding to different wireless access technologies reported by the sidelink user equipment using a same BSR MAC CE, or receiving BSRs corresponding to different wireless access technologies reported respectively by the sidelink user equipment using independent BSR MAC CEs.

Optionally, the configuration information of logical channel groups of the sidelink interface is a mapping relationship between QoS parameters of the sidelink interface and logical channel group identifiers, and logical channels in a same logical channel group only correspond to a kind of wireless access technology.

Optionally, the method further includes: receiving the auxiliary information reported by the sidelink user equipment, wherein the auxiliary information includes all or a part of QoS parameters corresponding to each logical channel of the sidelink interface of the sidelink user equipment.

Optionally, the mapping relationship between QoS parameters of the sidelink interface and logical channel group identifiers is any one or a combination of:
a mapping relationship between PPPP and logical channel group identifiers;
a mapping relationship between PPPR and logical channel group identifiers;
a mapping relationship between NR QoS parameters and logical channel group identifiers.

Optionally, the configuration information of logical channel groups of the sidelink interface is a mapping relationship between logical channels of the sidelink interface and logical channel group identifiers, and it is necessary to ensure that logical channels in a same logical channel group can only correspond to a kind of wireless access technology.

Optionally, the method further includes: receiving the auxiliary information reported by the sidelink user equipment, wherein the auxiliary information includes at least each logical channel identifier of a sidelink interface of the sidelink user equipment and its corresponding QoS parameters; and determining the configuration information of logical channel groups of the sidelink interface according to the auxiliary information reported by the sidelink user equipment.

Optionally, the auxiliary information further includes a wireless access technology that each logical channel of the sidelink interface of the sidelink user equipment expects to use.

Optionally, the method further includes: determining a mapping relationship between logical channels of the sidelink interface and logical channel group identifiers according to each logical channel identifier of the sidelink interface of the sidelink user equipment, its corresponding QoS parameters, and a mapping relationship between wireless access technologies and QoS parameters.

Optionally, the method further includes: pre-configuring a mapping relationship between wireless access technologies and physical resources; or determining a mapping relationship between wireless access technologies and physical resources dynamically.

Optionally, the method further includes: indicating a mapping relationship between physical resources allocated for the sidelink interface and wireless access technologies or QoS parameters or logical channels to the sidelink user equipment through the sidelink interface scheduling signaling transmitted on a Uu interface or a PDSCH scheduled by the sidelink interface scheduling signaling transmitted on the Uu interface.

Optionally, the method is applied to a network-side device or a user equipment as a cluster head in a communication group.

It should be understood by those skilled in the art that the embodiments of the application can provide methods, systems and computer program products. Thus the application can take the form of hardware embodiments alone, software embodiments alone, or embodiments combining the software and hardware aspects. Also the application can take the form of computer program products implemented on one or more computer usable storage mediums (including but not limited to magnetic disk memories, optical memories and the like) containing computer usable program codes therein.

The application is described by reference to the flow charts and/or the block diagrams of the methods, the devices (systems) and the computer program products according to the embodiments of the application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the application without departing from the scope of the application. Thus the application is also intended to encompass these modifications and variations therein as long as these modifications and variations to the application come into the scope of the claims of the application

## Claims

1. A method for allocating sidelink resource, wherein the method comprises:
reporting auxiliary information to a resource allocation management node;
receiving (901) configuration information of logical channel groups of a sidelink interface transmitted by the resource allocation management node, wherein the configuration information of logical channel groups of the sidelink interface is used to indicate that logical channels using different wireless access technologies correspond respectively to different logical channel groups;
determining (902) a logical channel group corresponding to a logical channel of the sidelink interface according to the configuration information of logical channel groups of the sidelink interface;
reporting a Buffer Status Report, BSR, according to the determined logical channel group corresponding to the logical channel of the sidelink interface;
receiving transmission resources of the sidelink interface allocated by a radio resource allocation management node according to the BSR;
wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology; the configuration information of logical channel groups of the sidelink interface is determined according to the auxiliary information;
when the configuration information of logical channel groups of the sidelink interface is the mapping relationship between QoS parameters of the sidelink interface and logical channel group identifiers, the auxiliary information comprises all or a part of QoS parameters corresponding to each logical channel of a sidelink interface of a sidelink user equipment;
when the configuration information of logical channel groups of the sidelink interface is the mapping relationship between logical channels of the sidelink interface and logical channel group identifiers, the auxiliary information comprises each logical channel identifier of a sidelink interface of a sidelink user equipment and corresponding QoS parameters, and a wireless access technology that each logical channel of the sidelink interface of the sidelink user equipment expects to use.

2. The method according to claim 1, wherein the mapping relationship between QoS parameters of the sidelink interface and logical channel group identifiers is any one or a combination of:
a mapping relationship between ProSe Per-Packet Priority, PPPP, and logical channel group identifiers;
a mapping relationship between ProSe Per-Packet Reliability, PPPR, and logical channel group identifiers;
a mapping relationship between New Radio, NR, QoS parameters and logical channel group identifiers.

3. The method according to claim 1, wherein reporting the BSR comprises:
reporting BSRs corresponding to different wireless access technologies by using a same BSR Media Access Control Control Element, MAC CE, or reporting BSRs corresponding to different wireless access technologies respectively by using independent BSR MAC CEs.

4. The method according to claim 1, further comprising:
receiving a mapping relationship between physical resources allocated for the sidelink interface and wireless access technologies, or physical resources allocated for the sidelink interface and QoS parameters, or physical resources allocated for the sidelink interface and logical channels indicated by the resource allocation management node through sidelink interface scheduling signaling transmitted on a Uu interface or a Physical Downlink Shared Channel, PDSCH, scheduled by the sidelink interface scheduling signaling transmitted on the Uu interface.

5. A method for allocating sidelink resource, wherein the method comprises:
receiving auxiliary information reported by a sidelink user equipment;
determining configuration information of logical channel groups of a sidelink interface according to the auxiliary information reported by the sidelink user equipment;
transmitting (1001) the configuration information of logical channel groups of the sidelink interface to the sidelink user equipment to indicate that logical channels using different wireless access technologies correspond respectively to different logical channel groups;
receiving (1002) a Buffer Status Report, BSR, reported by the sidelink user equipment based on the configuration information of logical channel groups of the sidelink interface;
allocating (1003) transmission resources of the sidelink interface to the sidelink user equipment on physical resources corresponding to a determined wireless access technology according to a correspondence between logical channel groups and wireless access technologies;
wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology;
when the configuration information of logical channel groups of the sidelink interface is the mapping relationship between QoS parameters of the sidelink interface and logical channel group identifiers, the auxiliary information comprises all or a part of QoS parameters corresponding to each logical channel of the sidelink interface of the sidelink user equipment;
when the configuration information of logical channel groups of the sidelink interface is the mapping relationship between logical channels of the sidelink interface and logical channel group identifiers, the auxiliary information comprises each logical channel identifier of the sidelink interface of the sidelink user equipment and corresponding QoS parameters, and a wireless access technology that each logical channel of the sidelink interface of the sidelink user equipment expects to use.

6. The method according to claim 5, wherein the mapping relationship between QoS parameters of the sidelink interface and logical channel group identifiers is any one or a combination of:
a mapping relationship between ProSe Per-Packet Priority, PPPP, and logical channel group identifiers;
a mapping relationship between ProSe Per-Packet Reliability, PPPR, and logical channel group identifiers;
a mapping relationship between New Radio, NR, QoS parameters and logical channel group identifiers.

7. The method according to claim 5, further comprising:
determining the mapping relationship between logical channels of the sidelink interface and logical channel group identifiers according to each logical channel identifier of the sidelink interface of the sidelink user equipment, corresponding QoS parameters, and a mapping relationship between wireless access technologies and QoS parameters.

8. The method according to claim 5, further comprising:
pre-configuring a mapping relationship between wireless access technologies and physical resources; or
determining a mapping relationship between wireless access technologies and physical resources dynamically.

9. A sidelink user equipment, wherein the sidelink user equipment comprises:
a first auxiliary information reporting module or a second auxiliary information reporting module configured to report auxiliary information to a resource allocation management node;
an indication receiving module (801) configured to receive configuration information of logical channel groups of a sidelink interface transmitted by the resource allocation management node, wherein the configuration information of logical channel groups of the sidelink interface is used to indicate that logical channels using different wireless access technologies correspond respectively to different logical channel groups;
a logical channel group determining module (802) configured to determine a logical channel group corresponding to a logical channel of the sidelink interface according to the configuration information of logical channel groups of the sidelink interface;
a report reporting module (803) configured to report a Buffer Status Report, BSR, according to the determined logical channel group corresponding to the logical channel of the sidelink interface;
a resource receiving module (804) configured to receive transmission resources of the sidelink interface allocated by a radio resource allocation management node according to the BSR;
wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology; the configuration information of logical channel groups of the sidelink interface is determined according to the auxiliary information;
when the configuration information of logical channel groups of the sidelink interface is the mapping relationship between QoS parameters of the sidelink interface and logical channel group identifiers, the auxiliary information comprises all or a part of QoS parameters corresponding to each logical channel of the sidelink interface of the sidelink user equipment;
when the configuration information of logical channel groups of the sidelink interface is the mapping relationship between logical channels of the sidelink interface and logical channel group identifiers, the auxiliary information comprises each logical channel identifier of the sidelink interface of the sidelink user equipment and corresponding QoS parameters, and a wireless access technology that each logical channel of the sidelink interface of the sidelink user equipment expects to use.

10. A resource allocation management node, wherein the resource allocation management node comprises:
a parameter receiving module configured to receive auxiliary information reported by a sidelink user equipment, and determine configuration information of logical channel groups of a sidelink interface according to the auxiliary information reported by the sidelink user equipment;
a configuration indication module (701) configured to transmit the configuration information of logical channel groups of the sidelink interface to the sidelink user equipment to indicate that logical channels using different wireless access technologies correspond respectively to different logical channel groups;
a report receiving module (702) configured to receive a Buffer Status Report, BSR, reported by the sidelink user equipment based on the configuration information of logical channel groups of the sidelink interface;
a resource allocation module (703) configured to allocate transmission resources of the sidelink interface to the sidelink user equipment on physical resources corresponding to a determined wireless access technology according to a correspondence between logical channel groups and wireless access technologies;
wherein the configuration information of logical channel groups of the sidelink interface is a mapping relationship between Quality of Service, QoS, parameters of the sidelink interface and logical channel group identifiers or a mapping relationship between logical channels of the sidelink interface and logical channel group identifiers, and logical channels in a same logical channel group only correspond to a kind of wireless access technology;
when the configuration information of logical channel groups of the sidelink interface is the mapping relationship between QoS parameters of the sidelink interface and logical channel group identifiers, the auxiliary information comprises all or a part of QoS parameters corresponding to each logical channel of the sidelink interface of the sidelink user equipment;
when the configuration information of logical channel groups of the sidelink interface is the mapping relationship between logical channels of the sidelink interface and logical channel group identifiers, the auxiliary information comprises each logical channel identifier of the sidelink interface of the sidelink user equipment and corresponding QoS parameters, and a wireless access technology that each logical channel of the sidelink interface of the sidelink user equipment expects to use.

## Patentansprüche

1. Verfahren zum Zuweisen von Sidelink-Ressourcen, wobei das Verfahren umfasst:
Melden von Zusatzinformationen an einen Ressourcenzuweisungsverwaltungsknoten;
Empfangen (901) von Auslegungsinformationen von Gruppen logischer Kanäle einer Sidelink-Schnittstelle, die vom Ressourcenzuweisungsverwaltungsknoten übertragen werden, wobei die Auslegungsinformationen von Gruppen logischer Kanäle der Sidelink-Schnittstelle verwendet werden, um anzuzeigen, dass logische Kanäle, die verschiedene Drahtloszugangstechnologien verwenden, jeweils verschiedenen Gruppen logischer Kanäle entsprechen;
Bestimmen (902) einer Gruppe logischer Kanäle, die einem logischen Kanal der Sidelink-Schnittstelle entspricht, gemäß den Auslegungsinformationen von Gruppen logischer Kanäle der Sidelink-Schnittstelle;
Melden eines "Buffer Status Report", BSR, entsprechend der bestimmten Gruppe logischer Kanäle, die dem logischen Kanal der Sidelink-Schnittstelle entspricht;
Empfangen von Übertragungsressourcen der Sidelink-Schnittstelle, die von einem Funkressourcenzuweisungsverwaltungsknoten gemäß dem BSR zugewiesen werden;
wobei die Auslegungsinformationen von Gruppen logischer Kanäle der Sidelink-Schnittstelle eine Abbildungsbeziehung zwischen "Quality of Service"-, QoS- , Parametern der Sidelink-Schnittstelle und Kennungen von Gruppen logischer Kanäle oder eine Abbildungsbeziehung zwischen logischen Kanälen der Sidelink-Schnittstelle und Kennungen von Gruppen logischer Kanäle ist, und logische Kanäle in einer gleichen Gruppe logischer Kanäle nur einer Art von Drahtloszugangstechnologie entsprechen; die Auslegungsinformationen von Gruppen logischer Kanäle der Sidelink-Schnittstelle gemäß den Zusatzinformationen bestimmt werden;
wenn es sich bei den Auslegungsinformationen von Gruppen logischer Kanäle der Sidelink-Schnittstelle um die Abbildungsbeziehung zwischen QoS-Parametern der Sidelink-Schnittstelle und Kennungen von Gruppen logischer Kanäle handelt, die Zusatzinformationen alle oder einen Teil von QoS-Parameter, die den einzelnen logischen Kanälen einer Sidelink-Schnittstelle eines Sidelink-Benutzergeräts entsprechen, umfassen;
wenn es sich bei den Auslegungsinformationen von Gruppen logischer Kanäle der Sidelink-Schnittstelle um die Abbildungsbeziehung zwischen logischen Kanälen der Sidelink-Schnittstelle und Kennungen von Gruppen logischer Kanäle handelt, die Zusatzinformationen jede Kennung logischer Kanäle einer Sidelink-Schnittstelle eines Sidelink-Benutzergeräts und entsprechende QoS-Parameter sowie eine Drahtloszugangstechnologie umfassen, die jeder einzelne logische Kanal der Sidelink-Schnittstelle des Sidelink-Benutzergeräts zu verwenden erwartet.

2. Verfahren nach Anspruch 1, wobei die Abbildungsbeziehung zwischen QoS-Parametern der Sidelink-Schnittstelle und Kennungen von Gruppen logischer Kanäle eine oder eine Kombination der folgenden Abbildungsbeziehungen ist:
eine Abbildungsbeziehung zwischen "ProSe Per-Packet Priority", PPPP, und Kennungen von Gruppen logischer Kanäle;
eine Abbildungsbeziehung zwischen "ProSe Per-Packet Reliability", PPPR, und Kennungen von Gruppen logischer Kanäle;
eine Abbildungsbeziehung zwischen "New Radio"-, NR-, QoS-Parametern und Kennungen von Gruppen logischer Kanäle.

3. Verfahren nach Anspruch 1, wobei das Melden des BSR umfasst:
Melden von BSRs, die verschiedenen Drahtloszugangstechnologien entsprechen, unter Verwendung eines gleichen BSR-"Media Access Control Element", MAC CE, oder das Melden von BSRs, die verschiedenen Drahtloszugangstechnologien entsprechen, unter Verwendung unabhängiger BSR-MAC-CEs.

4. Verfahren nach Anspruch 1, ferner umfassend:
Empfangen einer Abbildungsbeziehung zwischen physischen Ressourcen, die für die Sidelink-Schnittstelle zugewiesen sind, und Drahtloszugangstechnologien, oder physischen Ressourcen, die für die Sidelink-Schnittstelle zugewiesen sind, und QoS-Parametern, oder physischen Ressourcen, die für die Sidelink-Schnittstelle zugewiesen sind, und logischen Kanälen, die vom Ressourcenzuweisungsverwaltungsknoten durch Sidelink-Schnittstellenplanungssignalisierung, die auf einer Uu-Schnittstelle oder einem "Physical Downlink Shared Channel", PDSCH, der von der Sidelink-Schnittstellenplanungssignalisierung, die auf der Uu-Schnittstelle übertragen wird, geplant wird, angegeben wird.

5. Verfahren zum Zuweisen von Sidelink-Ressourcen, wobei das Verfahren umfasst:
Empfangen von Zusatzinformationen, die von einem Sidelink-Benutzergerät gemeldet werden;
Bestimmen von Auslegungsinformationen von Gruppen logischer Kanäle einer Sidelink-Schnittstelle gemäß den vom Sidelink-Benutzergerät gemeldeten Zusatzinformationen;
Übertragen (1001) der Auslegungsinformationen von Gruppen logischer Kanäle der Sidelink-Schnittstelle an das Sidelink-Benutzergerät zum Anzeigen, dass logische Kanäle, die verschiedene Drahtloszugangstechnologien verwenden, jeweils verschiedenen Gruppen logischer Kanäle entsprechen;
Empfangen (1002) eines "Buffer Status Report", BSR, der vom Sidelink-Benutzergerät auf der Grundlage der Auslegungsinformationen von Gruppen logischer Kanäle der Sidelink-Schnittstelle gemeldet wird;
Zuweisen (1003) von Übertragungsressourcen der Sidelink-Schnittstelle an das Sidelink-Benutzergerät auf physischen Ressourcen, die einer bestimmten Drahtloszugangstechnologie entsprechen, gemäß einer Entsprechung zwischen Gruppen logischer Kanäle und Drahtloszugangstechnologien;
wobei die Auslegungsinformationen von Gruppen logischer Kanäle der Sidelink-Schnittstelle eine Abbildungsbeziehung zwischen "Quality of Service"-, QoS- , Parametern der Sidelink-Schnittstelle und Kennungen von Gruppen logischer Kanäle oder eine Abbildungsbeziehung zwischen logischen Kanälen der Sidelink-Schnittstelle und Kennungen von Gruppen logischer Kanäle ist, und logische Kanäle in einer gleichen Gruppe logischer Kanäle nur einer Art von Drahtloszugangstechnologie entsprechen;
wenn es sich bei den Auslegungsinformationen von Gruppen logischer Kanäle der Sidelink-Schnittstelle um die Abbildungsbeziehung zwischen QoS-Parametern der Sidelink-Schnittstelle und Kennungen von Gruppen logischer Kanäle handelt, die Zusatzinformationen alle oder einen Teil der QoS-Parameter, die den einzelnen logischen Kanälen der Sidelink-Schnittstelle des Sidelink-Benutzergeräts entsprechen, umfassen;
wenn es sich bei den Auslegungsinformationen von Gruppen logischer Kanäle der Sidelink-Schnittstelle um die Abbildungsbeziehung zwischen logischen Kanälen der Sidelink-Schnittstelle und Kennungen von Gruppen logischer Kanäle handelt, die Zusatzinformationen jede Kennung logischer Kanäle der Sidelink-Schnittstelle des Sidelink-Benutzergeräts und entsprechende QoS-Parameter sowie eine Drahtloszugangstechnologie umfassen, die jeder einzelne logische Kanal der Sidelink-Schnittstelle des Sidelink-Benutzergeräts zu verwenden erwartet.

6. Verfahren nach Anspruch 5, wobei die Abbildungsbeziehung zwischen QoS-Parametern der Sidelink-Schnittstelle und Kennungen von Gruppen logischer Kanäle eine oder eine Kombination der folgenden Abbildungsbeziehungen ist:
eine Abbildungsbeziehung zwischen "ProSe Per-Packet Priority", PPPP, und Kennungen von Gruppen logischer Kanäle;
eine Abbildungsbeziehung zwischen "ProSe Per-Packet Reliability", PPPR, und Kennungen von Gruppen logischer Kanäle;
eine Abbildungsbeziehung zwischen "New Radio"-, NR-, QoS-Parametern und Kennungen von Gruppen logischer Kanäle.

7. Verfahren nach Anspruch 5, ferner umfassend:
Bestimmen der Abbildungsbeziehung zwischen logischen Kanälen der Sidelink-Schnittstelle und Kennungen von Gruppen logischer Kanäle gemäß den einzelnen Kennungen logischer Kanäle der Sidelink-Schnittstelle des Sidelink-Benutzergeräts, entsprechenden QoS-Parametern und einer Abbildungsbeziehung zwischen Drahtloszugangstechnologien und QoS-Parametern.

8. Verfahren nach Anspruch 5, ferner umfassend:
vorab Auslegen einer Abbildungsbeziehung zwischen Drahtloszugangstechnologien und physischen Ressourcen; oder
dynamisches Bestimmen einer Abbildungsbeziehung zwischen Drahtloszugangstechnologien und physischen Ressourcen.

9. Sidelink-Benutzergerät, wobei das Sidelink-Benutzergerät umfasst:
ein erstes Zusatzinformationsmeldemodul oder ein zweites Zusatzinformationsmeldemodul, das dafür ausgelegt ist, Zusatzinformationen an einen Ressourcenzuweisungsverwaltungsknoten zu melden;
ein Anzeigeempfangsmodul (801), das dafür ausgelegt ist, Auslegungsinformationen von Gruppen logischer Kanäle einer Sidelink-Schnittstelle zu empfangen, die vom Ressourcenzuweisungsverwaltungsknoten übertragen werden,
wobei die Auslegungsinformationen von Gruppen logischer Kanäle der Sidelink-Schnittstelle verwendet werden, um anzuzeigen, dass logische Kanäle, die verschiedene Drahtloszugangstechnologien verwenden, jeweils verschiedenen Gruppen logischer Kanäle entsprechen;
ein Bestimmungsmodul für Gruppen logischer Kanäle (802), das dafür ausgelegt ist, eine Gruppe logischer Kanäle zu bestimmen, die einem logischen Kanal der Sidelink-Schnittstelle entspricht, und zwar gemäß den Auslegungsinformationen von Gruppen logischer Kanäle der Sidelink-Schnittstelle;
ein Berichtsmeldemodul (803), das dafür ausgelegt ist, einen "Buffer Status Report", BSR, entsprechend der bestimmten Gruppe logischer Kanäle, die dem logischen Kanal der Sidelink-Schnittstelle entspricht, zu melden;
ein Ressourcenempfangsmodul (804), das dafür ausgelegt ist, Übertragungsressourcen der Sidelink-Schnittstelle zu empfangen, die von einem Funkressourcenzuweisungsverwaltungsknoten gemäß dem BSR zugewiesen werden;
wobei es sich bei den Auslegungsinformationen von Gruppen logischer Kanäle der Sidelink-Schnittstelle um eine Abbildungsbeziehung zwischen "Quality of Service"-, QoS- , Parametern der Sidelink-Schnittstelle und Kennungen von Gruppen logischer Kanäle oder eine Abbildungsbeziehung zwischen logischen Kanälen der Sidelink-Schnittstelle und Kennungen von Gruppen logischer Kanäle handelt, und logische Kanäle in einer gleichen Gruppe logischer Kanäle nur einer Art von Drahtloszugangstechnologie entsprechen; die Auslegungsinformationen von Gruppen logischer Kanäle der Sidelink-Schnittstelle gemäß den Zusatzinformationen bestimmt werden;
wenn es sich bei den Auslegungsinformationen von Gruppen logischer Kanäle der Sidelink-Schnittstelle um die Abbildungsbeziehung zwischen QoS-Parametern der Sidelink-Schnittstelle und Kennungen von Gruppen logischer Kanäle handelt, die Zusatzinformationen alle oder einen Teil der QoS-Parameter, die den einzelnen logischen Kanälen der Sidelink-Schnittstelle des Sidelink-Benutzergeräts entsprechen, umfassen;
wenn es sich bei den Auslegungsinformationen von Gruppen logischer Kanäle der Sidelink-Schnittstelle um die Abbildungsbeziehung zwischen logischen Kanälen der Sidelink-Schnittstelle und Kennungen von Gruppen logischer Kanäle handelt, die Zusatzinformationen jede Kennung logischer Kanäle der Sidelink-Schnittstelle des Sidelink-Benutzergeräts und entsprechende QoS-Parameter sowie eine Drahtloszugangstechnologie umfassen, die jeder einzelne logische Kanal der Sidelink-Schnittstelle des Sidelink-Benutzergeräts zu verwenden erwartet.

10. Ressourcenzuweisungsverwaltungsknoten, wobei der Ressourcenzuweisungsverwaltungsknoten umfasst:
ein Parameterempfangsmodul, das dafür ausgelegt ist, Zusatzinformationen zu empfangen, die von einem Sidelink-Benutzergerät gemeldet werden, und Auslegungsinformationen von Gruppen logischer Kanäle einer Sidelink-Schnittstelle gemäß den vom Sidelink-Benutzergerät gemeldeten Zusatzinformationen zu bestimmen;
ein Auslegungsanzeigemodul (701), das dafür ausgelegt ist, die Auslegungsinformationen von Gruppen logischer Kanäle der Sidelink-Schnittstelle an das Sidelink-Benutzergerät zu übertragen, zum Anzeigen, dass logische Kanäle, die verschiedene Drahtloszugangstechnologien verwenden, jeweils verschiedenen Gruppen logischer Kanäle entsprechen;
ein Berichtsempfangsmodul (702), das dafür ausgelegt ist, einen "Buffer Status Report", BSR, zu empfangen, der vom Sidelink-Benutzergerät auf der Grundlage der Auslegungsinformationen von Gruppen logischer Kanäle der Sidelink-Schnittstelle gemeldet wird;
ein Ressourcenzuweisungsmodul (703), das dafür ausgelegt ist, Übertragungsressourcen der Sidelink-Schnittstelle an das Sidelink-Benutzergerät auf physischen Ressourcen zuzuweisen, die einer bestimmten Drahtloszugangstechnologie entsprechen, gemäß einer Entsprechung zwischen Gruppen logischer Kanäle und Drahtloszugangstechnologien;
wobei es sich bei Auslegungsinformationen von Gruppen logischer Kanäle der Sidelink-Schnittstelle um eine Abbildungsbeziehung zwischen "Quality of Service"-, QoS- , Parametern der Sidelink-Schnittstelle und Kennungen von Gruppen logischer Kanäle oder eine Abbildungsbeziehung zwischen logischen Kanälen der Sidelink-Schnittstelle und Kennungen von Gruppen logischer Kanäle handelt, und logische Kanäle in einer gleichen Gruppe logischer Kanäle nur einer Art von Drahtloszugangstechnologie entsprechen;
wenn es sich bei den Auslegungsinformationen von Gruppen logischer Kanäle der Sidelink-Schnittstelle um die Abbildungsbeziehung zwischen QoS-Parametern der Sidelink-Schnittstelle und Kennungen von Gruppen logischer Kanäle handelt, die Zusatzinformationen alle oder einen Teil der QoS-Parameter, die den einzelnen logischen Kanälen der Sidelink-Schnittstelle des Sidelink-Benutzergeräts entsprechen, umfassen;
wenn es sich bei den Auslegungsinformationen von Gruppen logischer Kanäle der Sidelink-Schnittstelle um die Abbildungsbeziehung zwischen logischen Kanälen der Sidelink-Schnittstelle und Kennungen von Gruppen logischer Kanäle handelt, die Zusatzinformationen jede Kennung logischer Kanäle der Sidelink-Schnittstelle des Sidelink-Benutzergeräts und entsprechende QoS-Parameter sowie eine Drahtloszugangstechnologie umfassen, die jeder einzelne logische Kanal der Sidelink-Schnittstelle des Sidelink-Benutzergeräts zu verwenden erwartet.

## Revendications

1. Procédé d'attribution de ressources de liaison latérale, le procédé comprenant :
la communication d'informations auxiliaires à un noeud de gestion d'attribution de ressources ;
la réception (901) d'informations de configuration de groupes de canaux logiques d'une interface de liaison latérale transmises par le noeud de gestion d'attribution de ressources, les informations de configuration de groupes de canaux logiques de l'interface de liaison latérale servant à indiquer que des canaux logiques utilisant différentes technologies d'accès sans fil correspondent respectivement à différents groupes de canaux logiques ;
la détermination (902) d'un groupe de canaux logiques correspondant à un canal logique de l'interface de liaison latérale en fonction des informations de configuration de groupes de canaux logiques de l'interface de liaison latérale ;
la déclaration d'un rapport d'état de mémoire tampon, BSR, en fonction du groupe de canaux logiques déterminé correspondant au canal logique de l'interface de liaison latérale ;
la réception de ressources de transmission de l'interface de liaison latérale attribuées par un noeud de gestion d'attribution de ressources radio en fonction du BSR ;
dans lequel les informations de configuration de groupes de canaux logiques de l'interface de liaison latérale sont une relation de mappage entre des paramètres de qualité de service, QoS, de l'interface de liaison latérale et des identifiants de groupes de canaux logiques ou une relation de mappage entre des canaux logiques de l'interface de liaison latérale et des identifiants de groupes de canaux logiques, et les canaux logiques d'un même groupe de canaux logiques ne correspondent qu'à un type de technologie d'accès sans fil ; les informations de configuration de groupes de canaux logiques de l'interface de liaison latérale étant déterminées en fonction des informations auxiliaires ;
quand les informations de configuration de groupes de canaux logiques de l'interface de liaison latérale sont la relation de mappage entre des paramètres de QoS de l'interface de liaison latérale et des identifiants de groupes de canaux logiques, les informations auxiliaires comprennent tout ou partie des paramètres de QoS correspondant à chaque canal logique d'une interface de liaison latérale d'un équipement utilisateur de liaison latérale ;
quand les informations de configuration de groupes de canaux logiques de l'interface de liaison latérale sont la relation de mappage entre des canaux logiques de l'interface de liaison latérale et des identifiants de groupes de canaux logiques, les informations auxiliaires comprennent chaque identifiant de canal logique d'une interface de liaison latérale d'un équipement utilisateur de liaison latérale et les paramètres de QoS correspondants, ainsi qu'une technologie d'accès sans fil que chaque canal logique de l'interface de liaison latérale de l'équipement utilisateur de liaison latérale envisage d'utiliser.

2. Procédé selon la revendication 1, dans lequel la relation de mappage entre des paramètres de QoS de l'interface de liaison latérale et des identifiants de groupes de canaux logiques est l'une quelconque des relations suivantes ou une combinaison de celles-ci :
une relation de mappage entre une priorité par paquet ProSe, PPPP et des identifiants de groupes de canaux logiques ;
une relation de mappage entre une fiabilité par paquet ProSe, PPPR et des identifiants de groupes de canaux logiques ;
une relation de mappage entre des paramètres de QoS Nouvelle Radio, NR, et des identifiants de groupes de canaux logiques.

3. Procédé selon la revendication 1, dans lequel la déclaration du BSR comprend :
la déclaration de BSR correspondant à différentes technologies d'accès sans fil en utilisant un même élément de commande CE de commande d'accès au support, MAC, (MAC CE), de BSR, ou la déclaration de BSR correspondant respectivement à différentes technologies d'accès sans fil en utilisant des MAC CE de BSR indépendants.

4. Procédé selon la revendication 1, comprenant en outre :
la réception d'une relation de mappage entre des ressources physiques attribuées à l'interface de liaison latérale et des technologies d'accès sans fil, ou des ressources physiques attribuées à l'interface de liaison latérale et des paramètres de qualité de service, ou des ressources physiques attribuées à l'interface de liaison latérale et des canaux logiques indiqués par le noeud de gestion d'attribution de ressources par le biais d'une signalisation d'ordonnancement d'interface de liaison latérale transmise sur une interface Uu ou un canal physique partagé de liaison descendante, PDSCH, ordonnancé par la signalisation de planification d'interface de liaison latérale transmise sur l'interface Uu.

5. Procédé d'attribution de ressources de liaison latérale, le procédé comprenant :
la réception d'informations auxiliaires déclarées par un équipement utilisateur de liaison latérale ;
la détermination d'informations de configuration de groupes de canaux logiques d'une interface de liaison latérale en fonction des informations auxiliaires déclarées par l'équipement utilisateur de liaison latérale ;
la transmission (1001) des informations de configuration de groupes de canaux logiques de l'interface de liaison latérale à l'équipement utilisateur de liaison latérale afin d'indiquer que des canaux logiques utilisant différentes technologies d'accès sans fil correspondent respectivement à différents groupes de canaux logiques ;
la réception (1002) d'un rapport d'état de mémoire tampon, BSR, déclaré par l'équipement utilisateur de liaison latérale en fonction des informations de configuration de groupes de canaux logiques de l'interface de liaison latérale;
l'attribution (1003) de ressources de transmission de l'interface de liaison latérale à l'équipement utilisateur de liaison latérale sur des ressources physiques correspondant à une technologie d'accès sans fil déterminée en fonction d'une correspondance entre des groupes de canaux logiques et des technologies d'accès sans fil ;
dans lequel les informations de configuration de groupes de canaux logiques de l'interface de liaison latérale sont une relation de mappage entre des paramètres de qualité de service, QoS, de l'interface de liaison latérale et des identifiants de groupes de canaux logiques ou une relation de mappage entre des canaux logiques de l'interface de liaison latérale et des identifiants de groupes de canaux logiques, et des canaux logiques dans un même groupe de canaux logiques ne correspondent qu'à un type de technologie d'accès sans fil ;
quand les informations de configuration de groupes de canaux logiques de l'interface de liaison latérale sont la relation de mappage entre des paramètres de QoS de l'interface de liaison latérale et des identifiants de groupes de canaux logiques, les informations auxiliaires comprennent tout ou partie des paramètres de QoS correspondant à chaque canal logique de l'interface de liaison latérale de l'équipement utilisateur de liaison latérale ;
quand les informations de configuration de groupes de canaux logiques de l'interface de liaison latérale sont la relation de mappage entre des canaux logiques de l'interface de liaison latérale et des identifiants de groupes de canaux logiques, les informations auxiliaires comprennent chaque identifiant de canal logique de l'interface de liaison latérale de l'équipement utilisateur de liaison latérale et les paramètres de QoS correspondants, ainsi qu'une technologie d'accès sans fil que chaque canal logique de l'interface de liaison latérale de l'équipement utilisateur de liaison latérale envisage d'utiliser.

6. Procédé selon la revendication 5, dans lequel la relation de mappage entre des paramètres de QoS de l'interface de liaison latérale et des identifiants de groupes de canaux logiques est l'une quelconque des relations suivantes ou une combinaison de celles-ci :
une relation de mappage entre une priorité par paquet ProSe, PPPP et des identifiants de groupes de canaux logiques ;
une relation de mappage entre une fiabilité par paquet ProSe, PPPR et des identifiants de groupes de canaux logiques ;
une relation de mappage entre des paramètres de QoS Nouvelle Radio, NR, et des identifiants de groupes de canaux logiques.

7. Procédé selon la revendication 5, comprenant en outre :
la détermination de la relation de mappage entre des canaux logiques de l'interface de liaison latérale et des identifiants de groupes de canaux logiques en fonction de chaque identifiant de canal logique de l'interface de liaison latérale de l'équipement utilisateur de liaison latérale, des paramètres de QoS correspondants et d'une relation de mappage entre des technologies d'accès sans fil et des paramètres de QoS.

8. Procédé selon la revendication 5, comprenant en outre :
la préconfiguration d'une relation de mappage entre des technologies d'accès sans fil et des ressources physiques ; ou
la détermination dynamique d'une relation de mappage entre des technologies d'accès sans fil et les ressources physiques.

9. Equipement utilisateur de liaison latérale, l'équipement utilisateur de liaison latérale comprenant :
un premier module de déclaration d'informations auxiliaires ou un deuxième module déclaration d'informations auxiliaires configuré pour déclarer des informations auxiliaires à un noeud de gestion d'attribution de ressources ;
un module de réception d'indication (801) configuré pour recevoir des informations de configuration de groupes de canaux logiques d'une interface de liaison latérale transmises par le noeud de gestion d'attribution de ressources, les informations de configuration de groupes de canaux logiques de l'interface de liaison latérale servant à indiquer que les canaux logiques utilisant différentes technologies d'accès sans fil correspondent respectivement à différents groupes de canaux logiques ;
un module de détermination de groupe de canaux logiques (802) configuré pour déterminer un groupe de canaux logiques correspondant à un canal logique de l'interface de liaison latérale en fonction des informations de configuration de groupes de canaux logiques de l'interface de liaison latérale ;
un module de déclaration de rapport (803) configuré pour déclarer un rapport d'état de mémoire tampon, BSR, en fonction du groupe de canaux logiques déterminé correspondant au canal logique de l'interface de liaison latérale ;
un module de réception de ressources (804) configuré pour recevoir des ressources de transmission de l'interface de liaison latérale attribuées par un noeud de gestion d'attribution de ressources radio en fonction du BSR ;
dans lequel les informations de configuration de groupes de canaux logiques de l'interface de liaison latérale sont une relation de mappage entre des paramètres de qualité de service, QoS, de l'interface de liaison latérale et des identifiants de groupes de canaux logiques ou une relation de mappage entre des canaux logiques de l'interface de liaison latérale et des identifiants de groupes de canaux logiques, et des canaux logiques dans un même groupe de canaux logiques ne correspondent qu'à un type de technologie d'accès sans fil ; les informations de configuration de groupes de canaux logiques de l'interface de liaison latérale étant déterminées en fonction des informations auxiliaires ;
quand les informations de configuration de groupes de canaux logiques de l'interface de liaison latérale sont la relation de mappage entre des paramètres de QoS de l'interface de liaison latérale et des identifiants de groupes de canaux logiques, les informations auxiliaires comprennent tout ou partie des paramètres de QoS correspondant à chaque canal logique d'une interface de liaison latérale de l'équipement utilisateur de liaison latérale ;
quand les informations de configuration de groupes de canaux logiques de l'interface de liaison latérale sont la relation de mappage entre des canaux logiques de l'interface de liaison latérale et des identifiants de groupes de canaux logiques, les informations auxiliaires comprennent chaque identifiant de canal logique de l'interface de liaison latérale de l'équipement utilisateur de liaison latérale et les paramètres de QoS correspondants, ainsi qu'une technologie d'accès sans fil que chaque canal logique de l'interface de liaison latérale de l'équipement utilisateur de liaison latérale envisage d'utiliser.

10. Noeud de gestion d'attribution de ressources, le noeud de gestion d'attribution de ressources comprenant :
un module de réception de paramètres configuré pour recevoir des informations auxiliaires déclarées par un équipement utilisateur de liaison latérale, et déterminer des informations de configuration de groupes de canaux logiques d'une interface de liaison latérale en fonction des informations auxiliaires déclarées par l'équipement utilisateur de liaison latérale ;
un module d'indication de configuration (701) configuré pour transmettre les informations de configuration de groupes de canaux logiques de l'interface de liaison latérale à l'équipement utilisateur de liaison latérale afin d'indiquer que des canaux logiques utilisant différentes technologies d'accès sans fil correspondent respectivement à différents groupes de canaux logiques ;
un module de réception de rapport (702) configuré pour recevoir un rapport d'état de mémoire tampon, BSR, déclaré par l'équipement utilisateur de liaison latérale en fonction des informations de configuration de groupes de canaux logiques de l'interface de liaison latérale ;
un module d'attribution de ressources (703) configuré pour attribuer des ressources de transmission de l'interface de liaison latérale à l'équipement utilisateur de liaison latérale sur des ressources physiques correspondant à une technologie d'accès sans fil déterminée en fonction d'une correspondance entre des groupes de canaux logiques et des technologies d'accès sans fil ;
dans lequel les informations de configuration de groupes de canaux logiques de l'interface de liaison latérale sont une relation de mappage entre des paramètres de qualité de service, QoS, de l'interface de liaison latérale et des identifiants de groupes de canaux logiques ou une relation de mappage entre des canaux logiques de l'interface de liaison latérale et des identifiants de groupes de canaux logiques, et des canaux logiques dans un même groupe de canaux logiques ne correspondent qu'à un type de technologie d'accès sans fil ;
quand les informations de configuration de groupes de canaux logiques de l'interface de liaison latérale sont la relation de mappage entre des paramètres de QoS de l'interface de liaison latérale et des identifiants de groupes de canaux logiques, les informations auxiliaires comprennent tout ou partie des paramètres de QoS correspondant à chaque canal logique de l'interface de liaison latérale de l'équipement utilisateur de liaison latérale ;
quand les informations de configuration de groupes de canaux logiques de l'interface de liaison latérale sont la relation de mappage entre des canaux logiques de l'interface de liaison latérale et des identifiants de groupes de canaux logiques, les informations auxiliaires comprennent chaque identifiant de canal logique de l'interface de liaison latérale de l'équipement utilisateur de liaison latérale et les paramètres de QoS correspondants, ainsi qu'une technologie d'accès sans fil que chaque canal logique de l'interface de liaison latérale de l'équipement utilisateur de liaison latérale envisage d'utiliser.
